(19) Europäisches Patentamt
European Patent Office
Office européen des brevets

(11) **EP 4 768 096 A1**

(12) **EUROPEAN PATENT APPLICATION**
published in accordance with Art. 153(4) EPC

(43) Date of publication:
**01.07.2026 Bulletin 2026/27**

(21) Application number: **24893795.5**

(22) Date of filing: **11.07.2024**

(51) International Patent Classification (IPC):
**A63B 51/02** (2015.01)    **A63B 102/02** (2015.01)
**A63B 102/04** (2015.01)    **A63B 102/06** (2015.01)

(52) Cooperative Patent Classification (CPC):
(C-Sets available)
**C08J 5/005; C08J 5/10;** A63B 51/02;
A63B 2209/02; B82Y 30/00; C08J 2300/22;
C08J 2323/04; C08J 2377/02; C08J 2377/06
(Cont.)

(86) International application number:
**PCT/JP2024/025092**

(87) International publication number:
**WO 2025/109800 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.11.2023 JP 2023197092**

(71) Applicant: **Sumitomo Rubber Industries, Ltd.
Kobe-shi, Hyogo 651-0072 (JP)**

(72) Inventors:
• **NIWA, Kunio
Kobe-shi, Hyogo 651-0072 (JP)**
• **MIYATA, Atsutoshi
Kobe-shi, Hyogo 651-0072 (JP)**
• **KUMAMOTO, Tomio
Kobe-shi, Hyogo 651-0072 (JP)**

(74) Representative: **Manitz Finsterwald
Patent- und Rechtsanwaltspartnerschaft mbB
Martin-Greif-Straße 1
80336 München (DE)**

(54) **RACKET STRING**

(57)    A string for a racket includes a filament. The filament includes a polymer matrix and carbon nanotubes dispersed in the polymer matrix. The polymer matrix is formed from one thermoplastic polymer or two or more thermoplastic polymers compatible with each other. A racket includes the string for a racket. A method of producing the string for a racket includes: dispersively mixing the carbon nanotubes into a first thermoplastic polymer; obtaining a thermoplastic composition by mixing the first thermoplastic polymer, in which the carbon nanotubes are dispersed, and a second thermoplastic polymer compatible with the first thermoplastic polymer; and obtaining the filament by melt-spinning the thermoplastic composition.

FIG. 4

EP 4 768 096 A1

(52) Cooperative Patent Classification (CPC): (Cont.)

C-Sets
**C08L 77/02, C08L 23/06, C08K 3/041;**
**C08L 77/02, C08L 51/06, C08K 3/041**

## Description

### Technical Field

The present disclosure relates to a string for a racket for regulation-ball tennis, soft tennis, squash, badminton, or the like.

### Background Art

A racket for tennis, badminton, squash, or the like includes a frame and a string (that is sometimes referred to as gut). In recent years, strings formed from synthetic resin filaments have often been used.

A string stretched on a frame is subjected to a tensile load. Therefore, small cracks or notches that occur on the outer surface of the string may lead to breakage of the string. It is known that such breakage tends to occur particularly in a string having a monofilament structure formed from a single polymer material or a polymer alloy material. From the viewpoint of durability, instead of a string having a simple monofilament structure, for example, a string in which smaller-diameter monofilaments are wound around the outside of a core monofilament or core multifilament, or a string with a braided structure, is used.

Japanese National Phase PCT Laid-Open Application Publication No. 2010-510400 (hereinafter referred to as Patent Literature 1) discloses a string that includes: a monofilament core wrapped with a plurality of smaller-diameter multifilaments; a buffer layer that fills gaps between the multifilaments; and an outer coating that entirely covers the buffer layer, the multifilaments, and the monofilament core. In Patent Literature 1, a composite material of nylon and carbon nanotubes is used as the outer coating material. Japanese Laid-Open Patent Application Publication No. 2007-181553 (hereinafter referred to as Patent Literature 2) discloses a string for a racket, the string including a resin coating layer on its outer peripheral surface. This resin coating layer includes a synthetic resin and ultrafine carbon fibers contained in the synthetic resin, the ultrafine carbon fibers each having a solid coaxial multilayer structure in which graphene sheet tubes are layered in a concentric cylindrical arrangement such that the layers of the graphene sheet tubes extend to the center of the cylindrical arrangement.

As proposed in Patent Literatures 1 and 2, according to the technique to coat the outer surface of a string with resin, the surface properties of the string can be modified. However, there has been a problem in that the elastic modulus of the string cannot be sufficiently controlled.

Japanese Laid-Open Patent Application Publication No. 2023-017526 (hereinafter referred to as Patent Literature 3) proposes a string for a racket, the string being formed from a filament that is obtained by melt-spinning a blend of a thermoplastic polymer in which carbon nanotubes are dispersed and a thermoplastic polymer that serves as a base polymer. The thermoplastic polymer in which the carbon nanotubes are dispersed and the base thermoplastic polymer are incompatible with each other. The base thermoplastic polymer is a sea component, and the thermoplastic polymer in which the carbon nanotubes are dispersed is an island component.

### Citation List

### Patent Literature

PTL 1: Japanese National Phase PCT Laid-Open Application Publication No. 2010-510400
PTL 2: Japanese Laid-Open Patent Application Publication No. 2007-181553
PTL 3: Japanese Laid-Open Patent Application Publication No. 2023-017526

### Summary of Invention

### Technical Problem

According to Patent Literature 3, the elastic modulus of the string can be controlled, and thereby the feel at impact and flight performance can be improved. However, there is still room for improvement in terms of the durability and repulsion performance of the string.

An object of the present disclosure is to provide a string for a racket, the string having improved durability and repulsion performance.

## Solution to Problem

A string for a racket includes a filament. The filament includes a polymer matrix and carbon nanotubes dispersed in the polymer matrix. The polymer matrix is formed from one thermoplastic polymer or two or more thermoplastic polymers compatible with each other.

A method of producing the string for a racket includes: (1) dispersively mixing the carbon nanotubes into a first thermoplastic polymer; (2) obtaining a thermoplastic composition by mixing the first thermoplastic polymer, in which the carbon nanotubes are dispersed, and a second thermoplastic polymer compatible with the first thermoplastic polymer; and (3) obtaining the filament by melt-spinning the thermoplastic composition.

## Advantageous Effects of Invention

According to the present disclosure, in addition to the elastic modulus of the filament serving as a main component of the string, the loss factor of the filament can also be controlled. The string for a racket according to the present disclosure is well-balanced between feel at impact and ball flight performance, and has improved durability and repulsion performance.

## Brief Description of Drawings

FIG. 1 is a front view of a racket according to one embodiment of the present disclosure.

FIG. 2 is an enlarged perspective view showing part of a string of the racket of FIG. 1.

FIG. 3 is a sectional view of the string taken along line III-III of FIG. 2.

FIG. 4 is a sectional view of a string according to another embodiment of the present disclosure.

## Description of Embodiments

Hereinafter, the present disclosure is described in detail based on preferred embodiments with appropriate reference to the accompanying drawings. It should be noted that, in the present specification, a range "from X to Y" means "X or greater and Y or less". Also, in the present specification, a test temperature is always a room temperature (20°C $\pm$ 5°C) unless otherwise specified.

(String for a racket)

A string for a racket according to the present disclosure includes a filament. The filament includes a polymer matrix and carbon nanotubes dispersed in the polymer matrix. The polymer matrix is formed from one thermoplastic polymer or two or more thermoplastic polymers that are compatible with each other. The term "compatible" herein means the polymers being miscible with each other at the molecular level. The degree of miscibility is not limited, so long as advantageous effects of the present disclosure can be obtained. The thermoplastic polymers may be completely compatible with each other, or may be compatible with each other only in part. In the present specification, being compatible with each other only in part is in some cases referred to as being "partially compatible" with each other. It should be noted that the term "incompatible" refers to a state where polymers are not compatible with each other, i.e., a state where the polymers are, at the molecular level, immiscible with each other.

The disclosers of the present disclosure conducted diligent studies. As a result of the studies, they have found that in a case where a sea-island structure is formed in the polymer matrix formed from two or more thermoplastic polymers, the adhesion between the sea region and the island region affects the durability of the string. For example, in a case where the polymer forming the sea region and the polymer forming the island region are incompatible with each other, even if carbon nanotubes are placed in the island region, the adhesion between the sea region and the island region is poor, which may cause a reduction in durability. On the other hand, as mentioned above, the filament included in the string of the present disclosure includes the polymer matrix formed from one thermoplastic polymer or two or more thermoplastic polymers that are compatible with each other. Therefore, also in a case where a sea-island structure is formed in the polymer matrix, the polymer components are miscible with each other at the molecular level at the interface between the sea region and the island region. As a result, the adhesion between the sea region and the island region increases, and consequently the durability of the string is improved. Further, the disclosers of the present disclosure have found that by forming the polymer matrix from one thermoplastic polymer or two or more thermoplastic polymers that are compatible with each other, the loss tangent tan$\delta$ of the filament at a specific frequency or specific temperature is unexpectedly reduced, leading to significant improvement in repulsion performance. Since the filament included in the string includes the polymer matrix that is formed as described above and in which the carbon nanotubes are dispersed, the elastic modulus of the string can be controlled, and a desired feel at impact and desired ball flight performance can be obtained. The present disclosure makes it possible to obtain a string for a racket with improved durability and repulsion while maintaining an excellent feel at impact and ball flight performance.

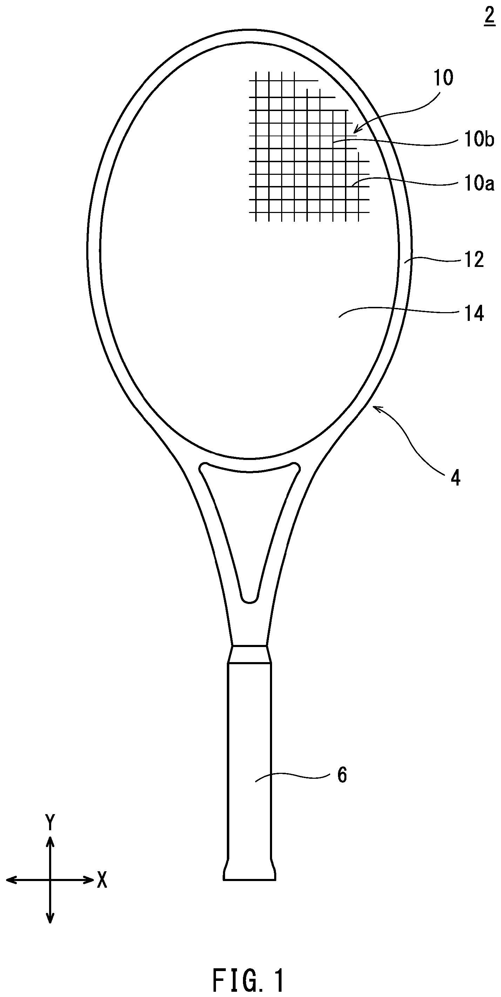

FIG. 1 shows a racket 2 including a string 10 according to one embodiment of the present disclosure. The racket 2 is a tennis racket. The tennis racket 2 can be used in regulation-ball tennis. The string 10 may be used in a racket for use in soft tennis, squash, badminton, or the like.

As shown in FIG. 1, the tennis racket 2 includes a frame 4 and a grip 6. The frame 4 includes a head 12, which forms the contour of a face 14. The front shape of the head 12 is substantially an ellipse. The major axis direction of the ellipse coincides with the axial direction Y of the tennis racket 2. The minor axis direction of the ellipse coincides with the width direction X of the tennis racket 2.

The string 10 is stretched on the head 12. The string 10 is stretched along the width direction X and the axial direction Y. Of the string 10, portions extending along the width direction X are referred to as transverse strings 10a. Of the string 10, portions extending along the axial direction Y are referred to as longitudinal strings 10b. The face 14 is formed by a plurality of transverse strings 10a and a plurality of longitudinal strings 10b. The face 14 generally extends along an X-Y plane.

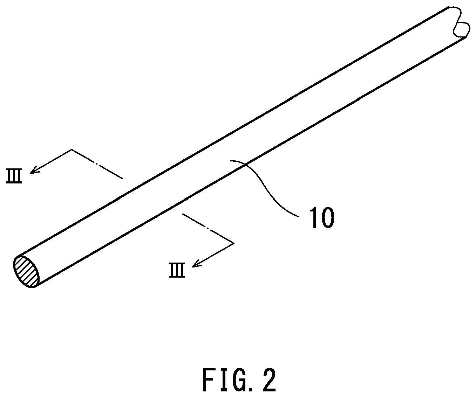

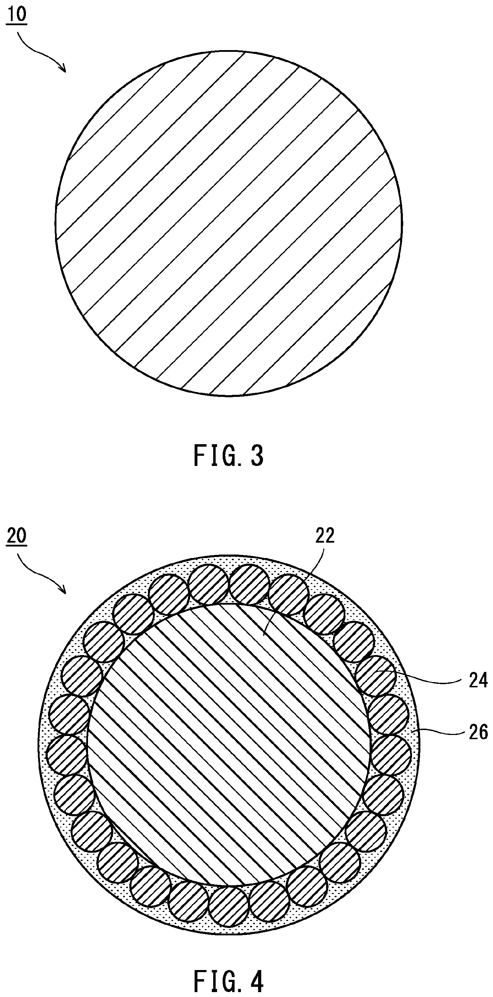

FIG. 2 shows the string 10. The string 10 has a monofilament structure, and is formed from the above-described filament. FIG. 3 is a sectional view showing a cross section of the string 10 taken along line III-III of FIG. 2. In the present disclosure, not only by an increase in durability owing to the above-described configuration of the polymer matrix, but also by a microcrack suppression effect provided by the carbon nanotubes, significant durability improvement can be achieved with the simple monofilament structure. Alternatively, the string 10 may have a multifilament structure that is formed by twisting a plurality of filaments together. The string 10 may include a coating on its surface.

FIG. 4 is a sectional view of a string 20 for a racket according to another embodiment of the present invention. The string 20 includes a core yarn 22, a plurality of cover yarns 24 covering the core yarn 22, and a coating resin layer 26 covering from the core yarn 22 to the outer sides of the plurality of cover yarns 24. In the present specification, this configuration of the string 20 is referred to as "core-and-cover yarn structure". In the string 20, either the core yarn 22 or the cover yarns 24, or both the core yarn 22 and the cover yarns 24, may be the above-described filament(s). From the viewpoint of readily obtaining the advantageous effects of the present disclosure, it is preferable that at least the core yarn 22 be the above-described filament.

The core yarn 22 may have either a monofilament structure or a multifilament structure. The diameter of each cover yarn 24 is preferably less than the diameter of the core yarn 22. The plurality of cover yarns 24 may be wound around the outside of the core yarn 22, or may cover the core yarn in the form of a braid. In terms of production cost, it is preferable to adopt a configuration in which the plurality of cover yarns 24 are wound around the outside of the core yarn 22.

As previously described, the filament included in the string of the present disclosure includes the polymer matrix in which the carbon nanotubes are dispersed. Hereinafter, more detailed descriptions are given regarding Mode A and Mode B sequentially. In Mode A, the polymer matrix is formed from one thermoplastic polymer, whereas in Mode B, the polymer matrix is formed from two or more thermoplastic polymers that are compatible with each other.

(Mode A)

In Mode A, the polymer matrix is formed from one thermoplastic polymer. No sea-island structure is formed in the polymer matrix of Mode A. The polymer matrix of Mode A can contribute to improving the durability and repulsion of the string.

Further, in the polymer matrix of Mode A, the carbon nanotubes are not uniformly dispersed, exhibiting a non-uniform dispersion state. In other words, in the polymer matrix of Mode A, a concentration gradient of the carbon nanotubes is formed. The "concentration gradient" herein refers to a state in which the concentration gradually (or continuously) changes from a high-concentration region to a low-concentration region and in which the interface between the high-concentration region and the low-concentration region is unclear. In Mode A, by adjusting the dispersion state of the carbon nanotubes, the elastic modulus of the filament can be controlled. The polymer matrix of Mode A may include a region in which no carbon nanotubes are present, so long as the advantageous effects of the present disclosure can be obtained.

(Mode B)

In Mode B, the polymer matrix is formed from two or more thermoplastic polymers. In the polymer matrix formed from two or more thermoplastic polymers that are completely compatible with each other (Mode B1), no sea-island structure is formed. In the polymer matrix of Mode B 1, the concentration gradient of the carbon nanotubes previously described in Mode A is formed. The polymer matrix of Mode B1 can contribute to improving the durability and repulsion of the string. In Mode B 1, by adjusting the dispersion state of the carbon nanotubes, the elastic modulus of the filament can be controlled.

In the polymer matrix formed from two or more thermoplastic polymers that are partially compatible with each other (Mode B2), a sea-island structure corresponding to the compatibility of the mixed thermoplastic polymers is formed. To be more specific, the type of the thermoplastic polymer (polymer component) included in the sea region and the type of the thermoplastic polymer (polymer component) included in the island region are different from each other. In Mode B2, the polymer component forming the sea region and the polymer component forming the island region are compatible with each other. At the interface between the sea region and the island region, the polymer component forming the sea region and the polymer component forming the island region are at least partially miscible with each other. In other words, in the polymer matrix of Mode B2, a sea-island structure is formed, in which at the interface between the island region and the sea region, the polymer component forming the island region and the polymer component forming the sea region are miscible with each other. Bing "miscible" herein means a state where the molecular chains of the polymer component of the sea region have entered the island region and/or the molecular chains of the polymer component of the island region have entered the sea region. In this sea-island structure, the sea region and the island region are not easily separated from each other. The adhesion between the sea region and the island region is high. The polymer matrix of Mode B2 can contribute to improving the durability of the string.

In the polymer matrix of Mode B2, a large portion of the carbon nanotubes is included in the island region. Preferably, at the interface between the island region and the sea region, the carbon nanotubes are diffused from the island region into the sea region. In other words, in the polymer matrix of Mode B2, a concentration gradient in which the carbon nanotubes are diffused from the island region into the sea region is formed. In Mode B2, by adjusting the concentration gradient (the diffused state) of the carbon nanotubes, the elastic modulus of the filament can be controlled. The concentration gradient (the diffused state) of the carbon nanotubes mainly depends on the degree of compatibility between the polymer component forming the island region and the polymer component forming the sea region. By selecting a combination of the polymer components, the concentration gradient of the carbon nanotubes can be adjusted.

Next, examples are given below to describe materials forming the string for a racket according to the present disclosure.

(Carbon Nanotubes)

Generally speaking, a carbon nanotube is a material having a tubular structure in which a graphene sheet having a six-membered carbon ring structure is rolled into a cylindrical shape. So long as the advantageous effects of the present disclosure are obtained, each of the carbon nanotubes herein may be a single-walled carbon nanotube in which the number of graphene sheets is one, or may be a multi-walled carbon nanotube in which the number of graphene sheets is two or more.

From the viewpoint of improving the dispersibility of the carbon nanotubes in thermoplastic polymers, the relative filling amount reduction ratio of the carbon nanotubes is preferably 4% or less, more preferably 3% or less, and yet more preferably 2% or less. In the description herein, the relative filling amount reduction ratio (expressed in %) is determined as follows: feeding a sample of 1.64 g of carbon nanotubes into a mixed solvent of 180 mL of distilled water and 900 mL of t-butyl alcohol; stirring the resulting mixture with a stirrer at 400 rpm for 15 hours and thereafter leaving the mixture to stand for two weeks; and then determining, as the relative filling amount reduction ratio, the ratio (expressed in %) of the volume occupied by the carbon nanotubes after standing to the volume occupied by the carbon nanotubes before standing, while taking the volume occupied by the carbon nanotubes before standing as 100%.

A method of producing the carbon nanotubes is not particularly limited, and commercially available carbon nanotubes can be suitably selected for use. Carbon nanotubes that have been subjected to disintegration treatment are preferred from the viewpoint of improving the mixing and dispersibility with thermoplastic polymers. So long as the advantageous effects of the present disclosure are obtained, the disintegration treatment is not limited to a particular method, and may be a wet method or a dry method. A method of disintegrating aggregated carbon nanotubes without crushing the carbon nanotubes is preferred, and disintegration treatment by a wet method is more preferred.

Examples of the wet method include a method in which the carbon nanotubes in the form of slurry are subjected to high-speed and high-shear treatment with a vertex flow by using, for example, a wet-type jet mill. The carbon nanotubes in the form of slurry can be obtained by adding and mixing carbon nanotubes available in a powdery or flaky form into water, an organic solvent, or a mixed solvent of water and an organic solvent. Examples of the organic solvent include t-butyl alcohol, isopropyl alcohol, and N-methylpyrrolidone. Examples of the dry method include a method in which carbon nanotubes available in a powdery or flaky form are disintegrated by, for example, a ball mill.

From the viewpoint of obtaining a string that is well-balanced between feel at impact and ball flight performance by controlling the elastic modulus of the filament, the content of the carbon nanotubes with respect to 100% by mass of the filament is preferably 0.001% by mass or greater, more preferably 0.002% by mass or greater, even more preferably 0.003% by mass or greater, and particularly preferably 0.004% by mass or greater. Also, the content of the carbon nanotubes with respect to 100% by mass of the filament is preferably 1.0% by mass or less, more preferably 0.5% by mass or less, even more preferably 0.1% by mass or less, and particularly preferably 0.01% by mass or less.

(Thermoplastic Polymer)

In the present specification, the term "thermoplastic" means a property of softening or melting upon heating above a particular temperature to become moldable and solidifying upon cooling. The term "thermoplastic polymer" means a polymer having this property. Specific examples of such thermoplastic polymers include polyamides (nylons), polyesters, polyolefins, and modified polyolefins. From the viewpoint of having excellent tensile strength and elongation, excellent knot strength, excellent durability, and, in the case of being applied to a surface coating, favorable adhesion to the coating layer, polyamides (nylons) are preferred.

Examples of polyamides (nylons) include polyamide 6, polyamide 66, polyamide 11, and polyamide 12. Examples of polyesters include polyethylene terephthalate (PET) and polybutylene terephthalate (PBT). Examples of polyolefins include high density polyethylene (HDPE), medium density polyethylene (MDPE), low density polyethylene (LDPE), low-pressure polyethylene (LIDPE), and polypropylene (PP). Examples of modified polyolefins include: copolymers of an olefin and an unsaturated acid or an acid anhydride; polyolefins grafted with an unsaturated acid or an acid anhydride; and copolymers of a polyolefin and a polyolefin grafted with an unsaturated acid or an acid anhydride. A suitable example of such a modified polyolefin is a maleic acid-modified polyethylene. As a polyethylene serving as the base of the maleic acid-modified polyethylene, high density polyethylene (HDPE) and low-pressure polyethylene (LIDPE) can be used.

Two or more thermoplastic polymers may be used in combination, so long as the advantageous effects of the present disclosure can be obtained. Preferably, the filament included in the string of the present disclosure includes a polymer matrix formed from one thermoplastic polymer, or two or more thermoplastic polymers, selected from the group consisting of polyamide 6, polyamide 66, polyamide 11, polyamide 12, and a maleic acid-modified polyethylene.

Preferably, one thermoplastic polymer selected from the group consisting of polyamide 6, polyamide 66, polyamide 11, polyamide 12, and a maleic acid-modified polyethylene forms the polymer matrix of Mode A described above. More preferably, polyamide 6 forms the polymer matrix of Mode A.

Preferably, two or more thermoplastic polymers selected from the group consisting of polyamide 6, polyamide 66, polyamide 11, polyamide 12, and a maleic acid-modified polyethylene form the polymer matrix of Mode B described above.

In the sea-island structure formed in the polymer matrix of Mode B, from the viewpoint of obtaining high adhesion between the sea region and the island region, the absolute value of the difference between the SP value of the thermoplastic polymer forming the sea region and the SP value of the thermoplastic polymer forming the island region is preferably 3.0 or less, more preferably 2.5 or less, even more preferably 2.0 or less, and particularly preferably 1.5 or less. The smaller the absolute value of the difference between the SP values, the higher the compatibility. The "SP value" herein is also referred to as a solubility parameter, and can be calculated by, for example, the Fedors method with reference to Polymer Handbook (Fourth Edition, authored by J. Brandrup and E. H. Immergut, published in 1999). For example, the SP values are as follows: polyamide 6 (SP value 12.7); polyamide 66 (SP value 13.6); polyamide 11 (SP value 12.3); polyamide 12 (SP value 12.1); maleic acid-modified polyethylene (SP value 8.7); and polyethylene (SP value 7.9).

One preferable mode is, for example, a combination in which the thermoplastic polymer forming the sea region is a nylon, and the thermoplastic polymer forming the island region is a maleic acid-modified polyethylene. The nylon forming the sea region may be selected from the group consisting of polyamide 6, polyamide 66, polyamide 11, and polyamide 12.

Another preferable mode is, for example, a combination in which the thermoplastic polymer forming the sea region is a first nylon, and the thermoplastic polymer forming the island region is a second nylon. Here, the first nylon and the second nylon are different from each other. In other words, in this mode, the thermoplastic polymer forming the sea region is a nylon and the thermoplastic polymer forming the island region is a different type of nylon from the thermoplastic polymer forming the sea region. The first nylon and the second nylon may be selected from the group consisting of polyamide 6, polyamide 66, polyamide 11, and polyamide 12. More preferably, the first nylon is polyamide 6, and the second nylon is selected from the group consisting of polyamide 66, polyamide 11, and polyamide 12.

In Mode B (particularly in Mode B2), the elastic modulus of the filament can be controlled by adjusting the ratio between the island region including the carbon nanotubes and the sea region. From the viewpoint of obtaining a string that is well-balanced between feel at impact and ball flight performance, the total content of the thermoplastic polymer forming the island region and the carbon nanotubes with respect to 100% by mass of the filament is preferably 0.1% by mass or greater, more preferably 0.2% by mass or greater, even more preferably 0.3% by mass or greater, and particularly preferably 0.5% by mass or greater. Also, the total content of the thermoplastic polymer forming the island region and the carbon nanotubes with respect to 100% by mass of the filament is preferably 10.0% by mass or less, more preferably 9.0% by mass or less, even more preferably 8.0% by mass or less, and particularly preferably 5.0% by mass or less.

The content of the thermoplastic polymer forming the sea region is suitably selected in accordance with the content of the island region including the carbon nanotubes. From the viewpoint of controlling the elastic modulus of the filament, the total content of the thermoplastic polymer forming the sea region with respect to 100% by mass of the filament is preferably 90.0% by mass or greater, more preferably 95.0% by mass or greater, even more preferably 96.0% by mass or greater, and particularly preferably 98.0% by mass or greater. Also, the total content of the thermoplastic polymer forming the sea region with respect to 100% by mass of the filament is preferably 99.9% by mass or less, more preferably 99.8% by mass or less, even more preferably 99.7% by mass or less, and particularly preferably 99.5% by mass or less.

(Resin Coating Layer)

The string for a racket according to the present disclosure may include a resin coating layer that covers the surface of the string. The resin is preferably nylon 6 or nylon 6/12. Nylon 6/12 is a co-condensate of amino acids, which is obtained by co-condensation of caprolactam (containing six carbon atoms) and lauryl lactam (containing twelve carbon atoms). Nylon 6/12 is considered to have about half the water absorbability of nylon 66. Alternatively, nylon 12 having even lower water absorbability may be used.

(Method of producing the string for a racket)

A method of producing the string for a racket according to the present disclosure includes: dispersively mixing carbon nanotubes into a first thermoplastic polymer; obtaining a thermoplastic composition by mixing the first thermoplastic polymer, in which the carbon nanotubes are dispersed, and a second thermoplastic polymer compatible with the first thermoplastic polymer; and obtaining a filament by melt-spinning the thermoplastic composition. The production method may further include disintegrating the carbon nanotubes before dispersively mixing the carbon nanotubes into the first thermoplastic polymer. The production method may further include coating the surface of the obtained filament with a resin. In the production method, the obtained filament may be used as a core yarn or a cover yarn. The production method may further include placing a plurality of cover yarns on the outer periphery of the core yarn and then covering the core yarn and the cover yarns with a resin coating.

Hereinafter, one example of a production method according to one embodiment of the present disclosure is described in detail.

(1) Disintegrating carbon nanotubes.

In this step, first, carbon nanotubes are mixed into water, an organic solvent, or a mixed solvent of water and an organic solvent to obtain slurry of the carbon nanotubes. The slurry is subjected to high-speed and high-shear treatment with a vertex flow by using a wet-type jet mill to disintegrate the carbon nanotubes. Preferably, the disintegration conditions are selected so that the relative filling amount reduction ratio falls within the aforementioned range. Thereafter, the slurry that has been subjected to the disintegration treatment is dried to obtain the carbon nanotubes that have been disintegrated. For example, freeze-drying is used for the drying.

(2) Dispersively mixing the carbon nanotubes into the first thermoplastic polymer.

In this step, the carbon nanotubes (preferably, the carbon nanotubes that have been disintegrated) are dispersively mixed into the first thermoplastic polymer to obtain a masterbatch containing the carbon nanotubes.

In a case where a sea-island structure is formed in the polymer matrix, the first thermoplastic polymer is the polymer component that mainly forms the island region. The first thermoplastic polymer may be selected from among the aforementioned thermoplastic polymers. Preferably, the first thermoplastic polymer is selected from the group consisting of polyamide 6, polyamide 66, polyamide 11, polyamide 12, and a maleic acid-modified polyethylene. In one embodiment, the first thermoplastic polymer is preferably a maleic acid-modified polyethylene. In another embodiment, the first thermoplastic polymer may be selected from among polyamide 66, polyamide 11, and polyamide 12.

A method of obtaining the masterbatch containing the carbon nanotubes is not particularly limited. For example, the carbon nanotubes that have been dried after the disintegration may be melt-kneaded with the first thermoplastic polymer to achieve dispersive mixing. The resulting mixture may be extruded, then cooled and pelletized. The resulting pellets may be crushed into powder. Alternatively, after the slurry containing the carbon nanotubes has been subjected to the disintegration treatment, it may be melt-kneaded with the first thermoplastic polymer without drying. In this case, while removing water or organic solvent from the slurry by evaporation or the like, the carbon nanotubes are dispersively mixed into the first thermoplastic polymer. The resulting mixture may be extruded and then cooled to obtain pellets or powder.

(3) Obtaining a thermoplastic composition by mixing the first thermoplastic polymer, in which the carbon nanotubes are dispersed, and the second thermoplastic polymer compatible with the first thermoplastic polymer.

In this step, the masterbatch containing the carbon nanotubes obtained in the previous step and the second thermoplastic polymer are mixed together to produce the thermoplastic composition. Melt kneading may be used for the mixing. Known additives, such as a filler, a colorant, an oxidation inhibitor, an ultraviolet absorber, an antioxidant, etc., may be added to the thermoplastic composition, so long as the advantageous effects of the present disclosure are obtained.

In a case where a sea-island structure is formed in the polymer matrix, the second thermoplastic polymer is the polymer component that mainly forms the sea region. In the present specification, the second thermoplastic polymer is also referred to as "base polymer". As the second thermoplastic polymer, a thermoplastic polymer that is compatible with the first thermoplastic polymer and that is selected from among those mentioned above may be used. Preferably, the second thermoplastic polymer is selected from the group consisting of polyamide 6, polyamide 66, polyamide 11, polyamide 12, and a maleic acid-modified polyethylene. In one embodiment, the second thermoplastic polymer is preferably a nylon, more preferably one selected from the group consisting of polyamide 6, polyamide 66, polyamide 11, and polyamide 12, and even more preferably polyamide 6. In another embodiment, the second thermoplastic polymer is preferably selected from the group consisting of polyamide 6, polyamide 66, polyamide 11, and polyamide 12, and more preferably polyamide 6.

By adjusting the mixing ratio between the masterbatch containing the carbon nanotubes (i.e., the first thermoplastic polymer in which the carbon nanotubes are dispersed) and the base polymer (i.e., the second thermoplastic polymer), the elastic modulus of the filament can be controlled. A preferred thermoplastic composition is obtained by mixing the first thermoplastic polymer in an amount from 0.1% by mass to 10% by mass, in which the carbon nanotubes are dispersed, and the second thermoplastic polymer in an amount from 90% by mass to 99.9% by mass.

From the viewpoint of obtaining a string that is well-balanced between feel at impact and ball flight performance, the amount of the first thermoplastic polymer in which the carbon nanotubes are dispersed is preferably 0.1% by mass or greater, more preferably 0.2% by mass or greater, even more preferably 0.3% by mass or greater, and particularly preferably 0.5% by mass or greater. Also, the amount of the first thermoplastic polymer in which the carbon nanotubes are dispersed is preferably 10.0% by mass or less, more preferably 9.0% by mass or less, even more preferably 8.0% by mass or less, and particularly preferably 5.0% by mass or less.

From the same viewpoint, the amount of the second thermoplastic polymer is preferably 90.0% by mass or greater, more preferably 95.0% by mass or greater, even more preferably 96.0% by mass or greater, and particularly preferably 98.0% by mass or greater. Also, the amount of the second thermoplastic polymer is preferably 99.9% by mass or less, more preferably 99.8% by mass or less, even more preferably 99.7% by mass or less, and particularly preferably 99.5% by mass or less.

From the viewpoint of obtaining a preferable feel at impact and ball flight performance by controlling the elastic modulus of the filament, the content of the carbon nanotubes with respect to 100% by mass of the thermoplastic composition is preferably 0.001% by mass or greater, more preferably 0.002% by mass or greater, even more preferably 0.003% by mass or greater, and particularly preferably 0.004% by mass or greater. Also, the content of the carbon nanotubes with respect to 100% by mass of the thermoplastic composition is preferably 1.0% by mass or less, more preferably 0.5% by mass or less, even more preferably 0.1% by mass or less, and particularly preferably 0.01% by mass or less.

(4) Obtaining a filament by melt-spinning the thermoplastic composition.

In this step, the obtained thermoplastic composition is subjected to melt spinning to produce a filament. A known method is adoptable for the filament production. Typically, the thermoplastic composition is heat-melted, then extruded from a spinneret, and drawn while being cooled, thereby producing the filament. The masterbatch containing the carbon nanotubes, and the base polymer, may be fed into a known extruder at the aforementioned mixing ratio, melt-mixed, then extruded and drawn to produce the filament. The diameter of the filament may be suitably selected in accordance with its intended use.

(5) Producing a string for a racket by using the filament.

In this step, a string for a racket is produced by using the filament obtained by the melt spinning. The filament (monofilament) obtained by the melt spinning may be directly used as the string for a racket according to the present disclosure. Alternatively, a plurality of filaments obtained by the melt spinning may be twisted together to obtain a multifilament, and the multifilament may be used as the string for a racket according to the present disclosure.

The outer surface of the filament or of the multifilament may be coated with the aforementioned coating resin, and the resulting filament or multifilament may be used as the string for a racket according to the present disclosure.

The filament obtained by the melt spinning may be used as a core yarn and/or a cover yarn to obtain a "core-and-cover yarn structure" string that may be used as the string for a racket according to the present disclosure. Typically, the "core-and-cover yarn structure" string is produced through the following steps: placing a plurality of cover yarns on the surface of a core yarn; and covering the core yarn and the plurality of cover yarns with a resin coating.

(5.1) Placing cover yarns on the surface of a core yarn.

In this step, a plurality of cover yarns are placed on the surface of a core yarn. Either the core yarn or the cover yarns or both of them may be the above-described filament(s). Preferably, at least the core yarn is the above-described filament.

For example, the monofilament having a diameter of 0.40 to 1.00 mm may be used as the core yarn, and the cover yarns each having a diameter of 0.10 to 0.20 mm may be S-twisted and wound around the surface of the core yarn. In this manner, the step of placing the cover yarns on the surface of the core yarn may be performed. The number of cover yarns is preferably 8 to 40, and more preferably 10 to 20. An adhesive may be applied to the surface of the core yarn. As the adhesive, for example, a nylon phenolic resin may be used.

(5.2) Coating the surfaces of the core yarn and the cover yarns with a resin.

In this step, the surfaces of the core yarn and the plurality of cover yarns are coated with a resin to form a coating resin layer on their surfaces. Any of the resins mentioned above for the coating resin layer is suitably selected for use.

For example, the surfaces of the core yarn and the plurality of cover yarns are melt-coated with nylon 6/12. Nylon 6/12 melts at 200 to 250°C. The resulting melt is extruded through a nozzle, and fed to the surfaces of the core yarn and the plurality of cover yarns. Here, the melt is squeezed with a ring, such that the melt in a predetermined amount adheres to the surfaces. Thereafter, the melt is cooled, and as a result, a coating resin layer made of nylon 6/12 is formed on the surfaces. The amount of the coating resin that adheres to the surfaces is preferably 1.20 to 1.35 g/m, and more preferably 1.28 to 1.32 g/m.

[Loss tangent tan$\delta$ of the string]

A loss tangent tan$\delta$ obtained from dynamic viscoelasticity measurement is reflected in the repulsion of the string. The loss tangent tan$\delta$ herein is measured by temperature dispersion measurement using a dynamic viscoelasticity measurement device (trade name "GABOMETER" available from NETZSCH) under the conditions of an initial load of 25 kgf, a frequency of 10Hz, and a temperature range from -50°C to 50°C.

Specifically, there is data indicating that when actually hitting a ball with a racket including a string, the contact time is 2 msec to 4 msec, which corresponds to a frequency of 250 to 500 Hz. Assuming that an actual hitting condition is 20°C, then $\Delta$10°C corresponds to one order of magnitude in frequency. At a viscoelasticity measurement condition of 10 Hz, considering a difference of two orders of magnitude in frequency from an actual hitting frequency, the loss tangent tan$\delta$ at 0°C, i.e., tan$\delta$ (0°C), is correlated with a full-swing shot. Also, the loss tangent tan$\delta$ at 10°C, i.e., tan$\delta$ (10°C), is correlated with a half-swing shot such as a touch shot.

A half-swing shot requires good ball bite, whereas a full-swing shot requires an appropriate repulsive feel. Accordingly, it is preferred that the ratio tan$\delta$ (10°C) / tan$\delta$ (0°C) be high. The ratio tan$\delta$ (10°C) / tan$\delta$ (0°C) is more preferably 1.14 or greater, even more preferably 1.15 or greater, and particularly preferably 1.18 or greater. The upper limit value of the ratio tan$\delta$ (10°C) / tan$\delta$ (0°C) is not particularly limited, but is preferably 1.60 or less.

From the viewpoint of obtaining a suitable repulsive feel, a smaller tan$\delta$ (0°C) is preferable. The tan$\delta$ (0°C) is more preferably 0.032 or less, even more preferably 0.031 or less, and particularly preferably 0.030 or less. The lower limit value of tan$\delta$ (0°C) is not particularly limited, but is preferably 0.022 or greater.

**Examples**

Hereinafter, the advantageous effects of the present disclosure will be elucidated by Examples. However, the present disclosure should not be restrictively construed based on the description of these Examples.

[Example A-1]

<Disintegration of carbon nanotubes>

(1) Multi-walled carbon nanotubes (trade name "NC7000" available from Nanocyl SA., with an average diameter of 9.5 nm and an average length of 1.5 $\mu$m) in an amount of 20 g were added to 2000 mL of distilled water, and then stirred overnight at 400 rpm by a stirrer, thereby obtaining slurry.

(2) The obtained slurry was subjected to high-speed and high-shear treatment with a vertex flow three times at a treatment pressure of 100 MPa by using a wet-type jet mill (trade name NAGS100 available from JOKOH CO., LTD.) to disintegrate the multi-walled carbon nanotubes.

(3) Then, 1000 mL of the slurry of the disintegrated carbon nanotubes was divided into two 500 mL portions, each of which was dried by using a freeze dryer (LS-6 freeze dryer available from PRECI CO., LTD.) to obtain 6.7 g of disintegrated carbon nanotube powder.

<Relative filling amount reduction ratio of carbon nanotubes>

The obtained disintegrated carbon nanotube powder in an amount of 1.64 g was fed into a mixed solvent of 180 mL of distilled water and 900 mL of t-butyl alcohol, and then stirred with a stirrer at 400 rpm for 15 hours, so that the carbon nanotube powder was dispersed in the mixed solvent. In this manner, a dispersion liquid was obtained. The dispersion liquid was put in a vial (having a volume of 1,800 ml) and left to stand for two weeks. The volume occupied by the carbon nanotubes in the dispersion liquid before standing and the volume occupied by the carbon nanotubes in the dispersion liquid after standing were measured. The measurement results indicated that the ratio of the volume occupied by the carbon nanotubes after standing to the volume occupied by the carbon nanotubes before standing (i.e., the relative filling amount reduction ratio) was 1%.

<Dispersive mixing of carbon nanotubes into a thermoplastic polymer>

(4) Dry Kneading

The disintegrated carbon nanotube powder in an amount of 1.5 g obtained in (3) and modified polyethylene resin pellets (maleic acid-modified polyethylene available from SK Functional Polymer S.A.S under the trade name of "BONDINE HX8290") in an amount of 300 g were mixed in a sealed container by shaking to obtain a mixture. The mixture was kneaded at a temperature of 150°C by a twin-screw extruder (KZW15TW-45MG-NH (-700) available from TECHNOVEL CORPORATION) to obtain a carbon nanotube/modified polyethylene 0.5 phr masterbatch containing 0.5 parts by mass of carbon nanotubes (CNT) with respect to 100 parts by mass of the modified polyethylene (Modified PE).

(5) Wet Kneading

A carbon nanotube/modified polyethylene 0.5 phr masterbatch that is obtained not by the dry kneading described above in (4) but by wet kneading can also be used in the same manner. In the case of adopting wet kneading, the carbon nanotube/modified polyethylene 0.5 phr masterbatch can be obtained by kneading 4000 mL of the disintegrated carbon nanotube slurry obtained in (2) and 8000 g of modified polyethylene resin pellets (maleic acid-modified polyethylene available from SK Functional Polymer S.A.S under the trade name of "BONDINE HX8290") at a temperature of 160°C by a twin-screw extruder (TEM-26SS-10/2V available from Shibaura Machine CO., LTD).

<Mixing the masterbatch with a base polymer>

The carbon nanotube/modified polyethylene 0.5 phr masterbatch in an amount of 515 g and nylon resin pellets serving as a base polymer (polyamide 6 available from DSM under the trade name of "1020J") in an amount of 51.5 kg were kneaded at a temperature of 240°C by a twin-screw extruder to obtain a spinning composition (PA6/Modified PE/CNT) having a mass ratio of carbon nanotubes/modified polyethylene/nylon 6 = 0.005/1/99.

<Production of a string for a racket>

The obtained spinning composition (PA6/Modified PE/CNT) was extruded at 240°C and spun into a monofilament having a diameter of 1.26 mm by using a melt spinning device with the settings of a draw ratio of 4 times and a post-drawing shrinkage factor of 4%. The obtained monofilament was directly used as a string of Example A-1.

[Example A-2 and Comparative Example A-2]

A string of Example A-2 and a string of Comparative Example A-2 were obtained in the same manner as the string of Example A-1 except that, in Example A-2, the modified polyethylene resin pellets were changed to nylon resin pellets (polyamide 12 available from Degussa under the trade name of "VESTAMID LX9012"), whereas in Comparative Example A-2, the modified polyethylene resin pellets were changed to polyethylene resin pellets (available from Japan Polyethylene Corporation under the trade name of "Kernel KC580S").

[Comparative Example A-1]

Polyethylene resin pellets (available from Japan Polyethylene Corporation under the trade name of "Kernel KC580S") in an amount of 515 g and nylon resin pellets serving as a base polymer (polyamide 6 available from DSM under the trade name of "1020J") in an amount of 51.5 kg were kneaded at a temperature of 240°C by a twin-screw extruder to obtain a spinning composition (PA6/PE) having a mass ratio of polyethylene/nylon 6 = 1/99. A string of Comparative Example A-1 was obtained by performing melt spinning in the same manner as in Example A-1, except that the spinning composition (PA6/PE) was used in Comparative Example A-1.

[Example B-1]

A spinning composition (PA6/Modified PE/CNT) obtained in the same manner as in Example A-1 was extruded at 240°C and spun into a core yarn filament having a diameter of 0. 88 mm by using a melt spinning device with the settings of a draw ratio of 4 times and a post-drawing shrinkage factor of 4%. Separately prepared nylon resin pellets (polyamide 6 available from DSM under the trade name of "1020J") were used to perform melt spinning in the same manner to obtain a cover yarn filament having a diameter of 0.22 mm. The amount of extrusion from the melt spinning device was adjusted to achieve these predetermined diameters. A phenolic adhesive was applied to the obtained core yarn filament, and thereafter 15 cover yarn filaments were wound around the core yarn filament and dried, followed by coating with nylon 66 resin, thereby obtaining a string of Example B-1.

[Comparative Example B-1]

A spinning composition (PA6/PE/CNT) obtained in the same manner as in Comparative Example A-2 was extruded at 240°C and spun into a core yarn filament having a diameter of 0.88 mm and a cover yarn filament having a diameter of 0.22 mm by using a melt spinning device with the settings of a draw ratio of 4 times and a post-drawing shrinkage factor of 4%. The core yarn filament and cover yarn filament obtained in this manner were used to obtain a string of Comparative Example B-1 in the same manner as in Example B-2.

[Comparative Example B-2]

A string of Comparative Example B-2 was obtained in the same manner as in Comparative Example B-1, except that nylon resin pellets (polyamide 6 available from DSM under the trade name of "1020J") were used in Comparative Example B-2 to obtain the cover yarn filament.

[Comparative Example B-3]

A string of Comparative Example B-3 was obtained in the same manner as in Comparative Example B-1, except that nylon resin pellets (polyamide 6 available from DSM under the trade name of "1020J") were used in Comparative Example B-3 to obtain the core yarn filament and the cover yarn filament.

[Tensile Properties]

A tensile test was performed on each of the strings of Examples and Comparative Examples in compliance with JIS L1013 to measure the tensile strength (unit: N), breaking elongation (unit: %), and elastic modulus (unit: GPa) of each string. The diameter of each string (fiber diameter) was measured by using a micrometer. For the tensile test, a tensile testing machine ("AUTOGRAPH AGS-100NX" available from Shimadzu Corporation) was used, and the measurement was performed under the conditions indicated below. Average measurement values obtained from the measurement performed five times are presented in Tables 1 and 2 shown below.

Chuck-to-chuck distance: 254 mm
Gauge length: 150 mm
Tension speed: 254 mm/min
Plot interval: 100 msec
Ambient temperature: 25°C

[Stiffness and Rebound Ratio]

Each string was tensioned to 50 pounds and fixed with clamps at both ends (clamp-to-clamp distance: 30 cm). Each string was impacted at its center by a pendulum-type hammer swung down from a fixed position to impact the string perpendicularly in the horizontal direction. The amount of movement (displacement) and stress of the string after the impact were measured at 1/1000-second intervals. The stiffness (unit: pounds per inch) and the rebound ratio (unit: %) of the string were determined by a method indicated below.

Stiffness (lb/inch) = maximum stress P(lb) / maximum displacement L (horizontal direction, inch)

$$\text{Rebound ratio } (\%) = (S2/S1) \times 100$$

In the above equations, for a stress-strain (displacement) curve (including loading and unloading portions), S1 is the area under the curve from the impact to the maximum displacement position (i.e., the area of the loading portion), and S2 is the area under the curve from the maximum displacement position to the zero displacement (i.e., the area of the unloading portion).

The obtained results are presented as stiffness and rebound ratio in Tables 1 and 2 shown below. The results indicate that the higher the value of the stiffness, the harder the feel at impact of a racket with the string stretched thereon, whereas the lower the value of the stiffness, the softer the feel at impact (softness). The higher the value of the rebound ratio, the lower the energy loss at impact, i.e., the greater the repulsion.

[Hold Feel]

Each string was tensioned to 50 pounds and fixed with clamps at both ends (clamp-to-clamp distance: 30 cm). Each string was impacted at its center by a pendulum-type hammer swung from a fixed position to impact the string perpendicularly in the horizontal direction, and a duration of time (unit: second) of contact between the hammer and the string was measured. This contact time is presented as a hold feel in Tables 1 and 2 shown below.

[Maximum Displacement]

Each string was tensioned to 50 pounds and fixed with clamps at both ends (clamp-to-clamp distance: 30 cm). Each string was impacted at its center by a pendulum-type hammer swung from a fixed position to impact the string perpendicularly in the horizontal direction. Strain (movement) of the string that occurred upon hammer impact was measured. The strain (unit: mm) is presented as the maximum displacement in Tables 1 and 2 shown below.

[Loss Tangent tan$\delta$]

The loss tangent of each string was measured by using a dynamic viscoelasticity measurement device (trade name "GABOMETER" available from NETZSCH). Specifically, temperature dispersion measurement was performed on each string under the conditions of an initial load of 25 kgf, a frequency of 10Hz, and a temperature range from -50°C to 50°C. For each string, the loss tangent tan$\delta$ at 0°C, i.e., tan$\delta$ (0°C), and the loss tangent tan$\delta$ at 10°C, i.e., tan$\delta$ (10°C), were measured, and the ratio tan$\delta$ (10°C) / tan$\delta$ (0°C) was calculated. The obtained results are presented in Tables 1 and 2 shown below. The greater the ratio tan$\delta$ (10°C) / tan$\delta$ (0°C), the higher the evaluation. Also, the smaller the tan$\delta$ (0°C), the higher the evaluation.

[Durability]

Each string was stretched to 40 pounds on a soft tennis racket and left for 24 hours. Thereafter, a soft tennis ball was launched at the racket (under the following conditions: a ball speed of 100 km/h; a launch interval of 15 times/min; a launch distance of 50 cm; a launch angle of 40 degrees; and the racket was impacted at four different points sequentially), and the number of launches was measured until the string broke. This test was performed a total of three times on each racket, and the average number of launches until the string broke is presented as durability in Tables 1 and 2 shown below. The greater the average value, the higher the evaluation.

[Table 1]

| (Table 1) Monofilament Structure | | | | | |
|---|---|---|---|---|---|
| | | Comp. Ex. A-1 | Comp. Ex. A-2 | Ex. A-1 | Ex. A-2 |
| Material | | PA6/PE | PA6/PE/CNT | PA6/Modified PE/CNT | PA6/PA12/CNT |
| Fiber diameter | [mm] | 1.26 | 1.27 | 1.26 | 1.26 |
| Tensile strength | [N] | 476 | 521 | 539 | 564 |
| Breaking elongation | [%] | 31.7 | 27.6 | 35.8 | 37.3 |
| Elastic modulus | [GPa] | 1.9 | 2.7 | 2.6 | 2.8 |
| Rebound ratio | [%] | 82.5 | 82.7 | 84.9 | 85.3 |

(continued)

| (Table 1) Monofilament Structure | | | | | |
|---|---|---|---|---|---|
| | | Comp. Ex. A-1 | Comp. Ex. A-2 | Ex. A-1 | Ex. A-2 |
| Material | | PA6/PE | PA6/PE/CNT | PA6/Modified PE/CNT | PA6/PA12/CNT |
| Hold feel | [sec] | 0.066 | 0.065 | 0.061 | 0.059 |
| Maximum displacement | [mm] | 31.6 | 31.4 | 29.9 | 28.5 |
| Stiffness | [lb/inch] | 19.4 | 19.8 | 20.2 | 20.6 |
| tanδ (10°C) | [-] | 0.0369 | 0.0337 | 0.0402 | 0.0393 |
| tanδ (0°C) | [-] | 0.0364 | 0.0317 | 0.0298 | 0.0306 |
| tanδ (10°C) / tanδ (0°C) | [-] | 1.014 | 1.063 | 1.349 | 1.284 |
| Durability | [-] | 12 | 18 | 116 | 121 |

[Table 2]

| (Table 2) Core-and-Cover Yarn Structure | | | | | |
|---|---|---|---|---|---|
| | | Comp. Ex. B-1 | Comp. Ex. B-2 | Comp. Ex. B-3 | Ex. B-1 |
| Material (core yarn) | | PA6/PE/CNT | PA6/PE/Dry CNT | PA6 | PA6/PA12/CNT |
| Material (cover yarn) | | PA6/PE/CNT | PA6 | PA6 | PA6 |
| Fiber diameter | [mm] | 1.31 | 1.34 | 1.35 | 1.34 |
| Tensile strength | [N] | 488 | 481 | 855 | 543 |
| Breaking elongation | [%] | 35.6 | 29.8 | 32.5 | 39.2 |
| Elastic modulus | [GPa] | 2.5 | 2.4 | 3.4 | 2.7 |
| Rebound ratio | [%] | 82.3 | 82.7 | 83.6 | 84.6 |
| Hold feel | [sec] | 0.066 | 0.067 | 0.063 | 0.060 |
| Maximum displacement | [mm] | 32.2 | 32 | 30.4 | 31.8 |
| Stiffness | [lb/inch] | 18.7 | 18.9 | 21.3 | 19.7 |
| tanδ (10°C) | [-] | 0.0454 | 0.0437 | 0.0366 | 0.0396 |
| tanδ (0°C) | [-] | 0.0394 | 0.0371 | 0.0326 | 0.0308 |
| tanδ (10°C) / tanδ (0°C) | [-] | 1.152 | 1.178 | 1.123 | 1.286 |
| Durability | [-] | 21 | 23 | 95 | 164 |

Details of the compounds listed in Tables 1 and 2 are as follows.

CNT: Multi-walled carbon nanotubes (trade name "NC7000" available from Nanocyl SA., with an average diameter of 9.5 nm and an average length of 1.5 μm) that had been subjected to disintegration treatment.
PA6: Nylon resin pellets available from DSM (polyamide 6 under the trade name of "1020J") with an SP value of 12.7.
PA 12: Nylon resin pellets available from Degussa (polyamide 12 under the trade name of "VESTAMID LX9012") with an SP value of 12.1.
PE: Polyethylene resin pellets available from Japan Polyethylene Corporation under the trade name of "Kernel KC580S" with an SP value of 7.9.
Modified PE: Maleic acid-modified polyethylene resin pellets available from SK Functional Polymer S.A.S under the trade name of "BONDINE HX8290" with an SP value of 8.7.

[Production and Evaluation of Rackets]

The strings of Examples and Comparative Examples were stretched on regulation-ball tennis rackets equalized in terms of weight and balance. A total of 10 adult males, including one professional tennis player, used each racket to hit a regulation tennis ball, and evaluated each racket regarding the items listed in Tables 3 and 4 shown below, using a scoring system. All the evaluations were conducted indoors on a hard court. The evaluations were conducted with a relative evaluation method, with scores assigned on a scale from 1 to 5 where a standard reference product was given a score of 3.0 points. Average evaluation scores given by the 10 males are presented in Tables 3 and 4 shown below. It should be noted that, for the evaluation of the strings with a monofilament structure (Table 3), a commercially available polyester string (Reference Example 1) was set as the standard reference product, whereas for the strings with a core-and-cover yarn structure (Table 4), the string of Comparative Example B-1 was set as the standard reference product.

[Table 3]

| (Table 3) Monofilament Structure | | | | | | | |
| --- | --- | --- | --- | --- | --- | --- | --- |
| | Soft feel at impact | Strong ball power and speed | Good flight | Good ball dwell time | Good controllability | High Spin | Average |
| Ref. Ex. 1 | 3.00 | 3.00 | 3.00 | 3.00 | 3.00 | 3.00 | 3.00 |
| Comp. Ex. A-2 | 4.20 | 3.35 | 3.55 | 4.20 | 3.60 | 3.30 | 3.70 |
| Comp. Ex. A-1 | 3.70 | 3.20 | 3.20 | 3.25 | 3.80 | 3.05 | 3.37 |
| Ex. A-1 | 3.95 | 3.45 | 3.80 | 3.40 | 4.20 | 3.45 | 3.71 |
| Ex. A-2 | 3.90 | 3.55 | 3.90 | 3.35 | 4.15 | 3.50 | 3.76 |

[Table 4]

| (Table 4) Core-and-Cover Yarn Structure | | | | | | | |
| --- | --- | --- | --- | --- | --- | --- | --- |
| | Soft feel at impact | Strong ball power and speed | Good flight | Good ball dwell time | Good controllability | High Spin | Average |
| Comp. Ex. B-1 | 3.00 | 3.00 | 3.00 | 3.00 | 3.00 | 3.00 | 3.00 |
| Comp. Ex. B-2 | 3.65 | 3.85 | 3.45 | 3.70 | 3.90 | 3.35 | 3.65 |
| Comp. Ex. B-3 | 3.75 | 3.15 | 3.20 | 3.80 | 3.25 | 3.50 | 3.44 |
| Ex. B-1 | 3.85 | 3.40 | 3.75 | 3.50 | 4.10 | 3.50 | 3.68 |

As shown in Tables 1 and 2, the strings of Examples are superior to the strings of Comparative Examples in terms of durability. It is also understood that, overall, the strings of Examples allow the ball to leave the racket easily without excessive bite, provide good repulsion, and efficiently transmit vibrations. As shown in Tables 3 and 4, the overall evaluation of the rackets of Examples is higher than that of the rackets of Comparative Examples. These evaluation results clearly indicate the superiority of the present disclosure.

[Disclosure Items]

The following items each disclose a preferred embodiment.

[Item 1]

A string for a racket, the string including a filament, wherein: the filament includes a polymer matrix and carbon nanotubes dispersed in the polymer matrix; and the polymer matrix is formed from one thermoplastic polymer or two or more thermoplastic polymers compatible with each other.

[Item 2]

The string for a racket according to item 1, wherein: the polymer matrix is formed from the one thermoplastic polymer; and a concentration gradient of the carbon nanotubes is formed in the polymer matrix.

[Item 3]

The string for a racket according to item 1, wherein: the polymer matrix is formed from the two or more thermoplastic polymers; in the polymer matrix, a sea-island structure is formed, in which at an interface between an island region and a sea region, a polymer component forming the island region and a polymer component forming the sea region are miscible with each other; and a concentration gradient in which the carbon nanotubes are diffused from the island region into the sea region is formed.

[Item 4]

The string for a racket according to any one of items 1 to 3, wherein a relative filling amount reduction ratio of the carbon nanotubes is 4% or less, the relative filling amount reduction ratio being determined by a method defined as follows: (the method of measuring the relative filling amount reduction ratio including: feeding a sample of 1.64 g of carbon nanotubes into a mixed solvent of 180 mL of distilled water and 900 mL of t-butyl alcohol; stirring a resulting mixture with a stirrer at 400 rpm for 15 hours and thereafter leaving the mixture to stand for two weeks; and then determining, as the relative filling amount reduction ratio (expressed in %), a ratio of a volume occupied by the carbon nanotubes after standing to a volume occupied by the carbon nanotubes before standing, while taking the volume occupied by the carbon nanotubes before standing as 100%).

[Item 5]

The string for a racket according to any one of items 1 to 4, wherein a content of the carbon nanotubes is from 0.001% by mass to 1.0% by mass with respect to 100% by mass of the filament.

[Item 6]

The string for a racket according to any one of items 3 to 5, wherein: a total content of a thermoplastic polymer forming the island region and the carbon nanotubes with respect to 100% by mass of the filament is from 0.1% by mass to 10.0% by mass; and a content of a thermoplastic polymer forming the sea region with respect to 100% by mass of the filament is from 90.0% by mass to 99.9% by mass.

[Item 7]

The string for a racket according to any one of items 3 to 6, wherein an absolute value of a difference between an SP value of a thermoplastic polymer forming the sea region and an SP value of a thermoplastic polymer forming the island region is 3.0 or less.

[Item 8]

The string for a racket according to any one of items 3 to 7, wherein: a thermoplastic polymer forming the sea region is a nylon; and a thermoplastic polymer forming the island region is a maleic acid-modified polyethylene.

[Item 9]

The string for a racket according to any one of items 3 to 8, wherein: a thermoplastic polymer forming the sea region is a nylon; and a thermoplastic polymer forming the island region is a different type of nylon from the thermoplastic polymer forming the sea region.

[Item 10]

The string for a racket according to any one of items 1 to 9, wherein the thermoplastic polymer is selected from the group consisting of polyamide 6, polyamide 66, polyamide 11, polyamide 12, and a maleic acid-modified polyethylene.

[Item 11]

The string for a racket according to any one of items 1 to 10, wherein: the filament is a monofilament; and the string is formed from the monofilament.

[Item 12]

The string for a racket according to any one of items 1 to 10, the string including: a core yarn; a cover yarn covering the core yarn; and a coating resin layer covering from the core yarn to an outer side of the cover yarn, wherein at least one of the core yarn or the cover yarn is the filament.

[Item 13]

A racket including the string for a racket according to any one of items 1 to 12.

[Item 14]

A method of producing the string for a racket according to item 1, the method including: dispersively mixing the carbon nanotubes into a first thermoplastic polymer; obtaining a thermoplastic composition by mixing the first thermoplastic polymer, in which the carbon nanotubes are dispersed, and a second thermoplastic polymer compatible with the first thermoplastic polymer; and obtaining the filament by melt-spinning the thermoplastic composition.

[Item 15]

The method of producing the string for a racket according to item 14, the method including obtaining the thermoplastic composition by mixing the first thermoplastic polymer in an amount from 0.1% by mass to 10.0% by mass, in which the carbon nanotubes are dispersed, and the second thermoplastic polymer in an amount from 90.0% by mass to 99.9% by mass.

[Item 16]

The method of producing the string for a racket according to item 14 or 15, wherein a content of the carbon nanotubes is from 0.001% by mass to 1.0% by mass with respect to 100% by mass of the thermoplastic composition.

**Industrial Applicability**

The above-described string for a racket is suitable for use in various sports, such as regulation-ball tennis, soft tennis, badminton, and squash.

**Reference Signs List**

| | |
|---|---|
| 2 | tennis racket |
| 4 | frame |
| 6 | grip |
| 10, 20 | string |
| 10a | transverse string |
| 10b | longitudinal string |
| 12 | head |
| 14 | face |
| 22 | core yarn |
| 24 | cover yarn |
| 26 | coating resin layer |

**Claims**

1. A string for a racket, the string comprising a filament, wherein:

   the filament includes a polymer matrix and carbon nanotubes dispersed in the polymer matrix; and
   the polymer matrix is formed from one thermoplastic polymer or two or more thermoplastic polymers compatible with each other.

2. The string for a racket according to claim 1, wherein:

the polymer matrix is formed from the one thermoplastic polymer; and
a concentration gradient of the carbon nanotubes is formed in the polymer matrix.

3. The string for a racket according to claim 1, wherein:

the polymer matrix is formed from the two or more thermoplastic polymers;
in the polymer matrix, a sea-island structure is formed, in which at an interface between an island region and a sea region, a polymer component forming the island region and a polymer component forming the sea region are miscible with each other; and
a concentration gradient in which the carbon nanotubes are diffused from the island region into the sea region is formed.

4. The string for a racket according to claim 1, wherein
a relative filling amount reduction ratio of the carbon nanotubes is 4% or less, the relative filling amount reduction ratio being determined by a method defined as follows: (the method of measuring the relative filling amount reduction ratio including: feeding a sample of 1.64 g of carbon nanotubes into a mixed solvent of 180 mL of distilled water and 900 mL of t-butyl alcohol; stirring a resulting mixture with a stirrer at 400 rpm for 15 hours and thereafter leaving the mixture to stand for two weeks; and then determining, as the relative filling amount reduction ratio (expressed in %), a ratio of a volume occupied by the carbon nanotubes after standing to a volume occupied by the carbon nanotubes before standing, while taking the volume occupied by the carbon nanotubes before standing as 100%).

5. The string for a racket according to claim 1, wherein
a content of the carbon nanotubes is from 0.001% by mass to 1.0% by mass with respect to 100% by mass of the filament.

6. The string for a racket according to claim 3, wherein:

a total content of a thermoplastic polymer forming the island region and the carbon nanotubes with respect to 100% by mass of the filament is from 0.1% by mass to 10.0% by mass; and
a content of a thermoplastic polymer forming the sea region with respect to 100% by mass of the filament is from 90.0% by mass to 99.9% by mass.

7. The string for a racket according to claim 3, wherein
an absolute value of a difference between an SP value of a thermoplastic polymer forming the sea region and an SP value of a thermoplastic polymer forming the island region is 3.0 or less.

8. The string for a racket according to claim 3, wherein:

a thermoplastic polymer forming the sea region is a nylon; and
a thermoplastic polymer forming the island region is a maleic acid-modified polyethylene.

9. The string for a racket according to claim 3, wherein:

a thermoplastic polymer forming the sea region is a nylon; and
a thermoplastic polymer forming the island region is a different type of nylon from the thermoplastic polymer forming the sea region.

10. The string for a racket according to claim 1, wherein
the thermoplastic polymer is selected from the group consisting of polyamide 6, polyamide 66, polyamide 11, polyamide 12, and a maleic acid-modified polyethylene.

11. The string for a racket according to claim 1, wherein:

the filament is a monofilament; and
the string is formed from the monofilament.

**12.** The string for a racket according to claim 1, the string comprising:

a core yarn;
a cover yarn covering the core yarn; and
a coating resin layer covering from the core yarn to an outer side of the cover yarn, wherein
at least one of the core yarn or the cover yarn is the filament.

**13.** A racket comprising the string for a racket according to claim 1.

**14.** A method of producing the string for a racket according to claim 1, the method comprising:

dispersively mixing the carbon nanotubes into a first thermoplastic polymer;
obtaining a thermoplastic composition by mixing the first thermoplastic polymer, in which the carbon nanotubes are dispersed, and a second thermoplastic polymer compatible with the first thermoplastic polymer; and
obtaining the filament by melt-spinning the thermoplastic composition.

**15.** The method of producing the string for a racket according to claim 14, the method comprising obtaining the thermoplastic composition by mixing the first thermoplastic polymer in an amount from 0.1% by mass to 10.0% by mass, in which the carbon nanotubes are dispersed, and the second thermoplastic polymer in an amount from 90.0% by mass to 99.9% by mass.

**16.** The method of producing the string for a racket according to claim 14, wherein
a content of the carbon nanotubes is from 0.001% by mass to 1.0% by mass with respect to 100% by mass of the thermoplastic composition.

FIG. 1

FIG. 2

10

**FIG. 3**

20    22

24

26

**FIG. 4**

## INTERNATIONAL SEARCH REPORT

| | International application No. |
|---|---|
| | **PCT/JP2024/025092** |

### A. CLASSIFICATION OF SUBJECT MATTER

*A63B 51/02*(2015.01)i; *A63B 102/02*(2015.01)n; *A63B 102/04*(2015.01)n; *A63B 102/06*(2015.01)n
FI:  A63B51/02; A63B102:02; A63B102:04; A63B102:06

According to International Patent Classification (IPC) or to both national classification and IPC

### B. FIELDS SEARCHED

Minimum documentation searched (classification system followed by classification symbols)

A63B51/02; A63B102/02; A63B102/04; A63B102/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-519402 A (APPLIED NANOTECH HOLDINGS, INC.) 03 June 2010 (2010-06-03) paragraphs [0005]-[0011] | 1, 5, 11-13 |
| Y | | 10 |
| A | | 2-4, 6-9, 14-16 |
| Y | JP 2023-41015 A (UNITIKA LTD.) 23 March 2023 (2023-03-23) paragraph [0019] | 10 |
| A | JP 2023-17526 A (THE JAPAN WOOL TEXTILE CO., LTD.) 07 February 2023 (2023-02-07) paragraphs [0009]-[0011] | 1-16 |
| A | JP 2013-513020 A (APPLIED NANOSTRUCTURED SOLUTIONS, LLC) 18 April 2013 (2013-04-18) paragraph [0028] | 1-16 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 August 2024** | **10 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
|---|
| **PCT/JP2024/025092** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2021/009052 A1 (DUVAL, Sebastien) 21 January 2021 (2021-01-21)<br>entire text | 1-16 |

Form PCT/ISA/210 (second sheet) (July 2022)

## INTERNATIONAL SEARCH REPORT
### Information on patent family members

International application No.

**PCT/JP2024/025092**

| Patent document cited in search report | | | Publication date (day/month/year) | Patent family member(s) | | | Publication date (day/month/year) |
|---|---|---|---|---|---|---|---|
| JP | 2010-519402 | A | 03 June 2010 | US | 2008/0206559 | A1 | |
| | | | | paragraphs [0003]-[0010] | | | |
| | | | | WO | 2008/106426 | A1 | |
| JP | 2023-41015 | A | 23 March 2023 | (Family: none) | | | |
| JP | 2023-17526 | A | 07 February 2023 | (Family: none) | | | |
| JP | 2013-513020 | A | 18 April 2013 | US | 2011/0297892 | A1 | |
| | | | | paragraph [0038] | | | |
| | | | | WO | 2011/072071 | A1 | |
| | | | | EP | 2509918 | A1 | |
| | | | | CN | 102648155 | A | |
| WO | 2021/009052 | A1 | 21 January 2021 | EP | 3997261 | B1 | |
| | | | | entire text | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010510400 W
- JP 2007181553 A
- JP 2023017526 A

**Non-patent literature cited in the description**

- Polymer Handbook. 1999